# EUROPEAN PATENT APPLICATION

(11) **EP 4 832 067 A1**
(43) Date of publication of application: **28.10.2026**
(21) Application number: 25874177.6
(22) Date of filing: 10.09.2025
(51) Int. Cl.: H01M 4/13, H01M 10/0562, H01M 10/052, H01M 10/0585, H01M 4/62, H01M 4/1391, H01M 4/525, H01M 4/505, H01M 4/02

(54) **SOLID ELECTROLYTE AND ALL-SOLID-STATE BATTERY COMPRISING SAME**

(30) Priority: 26.09.2024 KR 20240130941; 09.09.2025 KR 20250127968
(71) Applicant: LG Energy Solution, Ltd., Seoul 07335 (KR)
(72) Inventor: CHOI, Seokin, Daejeon 34122 (KR); KWON, Hyejin, Daejeon 34122 (KR); LEE, Choonghyeon, Daejeon 34122 (KR); KIM, Myeongsoo, Daejeon 34122 (KR); OH, Kyungbae, Daejeon 34122 (KR); PARK, Mihui, Daejeon 34122 (KR); KANG, Sora, Daejeon 34122 (KR); LEE, Junho, Daejeon 34122 (KR)
(74) Representative: Goddar, Heinz J.
(86) International application number: PCT/KR2025/095546
(87) International publication number: WO 2026/071863

(57) **Abstract**

The present disclosure relates to a positive electrode for all-solid-state batteries with improved electrochemical characteristics by applying a sulfide-based solid electrolyte having an argyrodite-type structure with Young's modulus of less than 20 GPa and reducing the porosity of the positive electrode to less than 20%.

## Description

### [TECHNICAL FIELD]

This application claims the benefit of priority based on Korean Patent Application No. 10-2024-0130941 filed on September 26, 2024 and Korean Patent Application No. 10-2025-0127968 filed on September 9, 2025, and incorporates all contents disclosed in the documents of the corresponding Korean patent applications as part of this specification.

The present disclosure relates to a solid electrolyte and an all-solid-state battery comprising the same.

### [BACKGROUND ART]

Lithium secondary batteries have been mainly applied to small fields such as mobile devices, notebooks, and computers, but recent research directions are expanding to medium and large fields, and are gradually moving toward fields requiring high output mainly in relation to energy storage systems (ESS) and electric vehicles (EV).

In the case of such medium and large lithium secondary batteries, unlike small ones, not only the operating environment (for example, temperature, impact) is harsh, but also more batteries need to be used, so safety needs to be ensured along with excellent performance and appropriate price.

Since most lithium secondary batteries currently commercialized use an organic liquid electrolyte in which lithium salt is dissolved in a flammable organic solvent, they carry potential risks for leakage, ignition, and explosion. In fact, explosion accidents of products applying these are continuously reported, so it is urgent to solve such problems.

If safety devices are to be used to solve this problem, there is a concern that energy density may be lost due to the considerable weight occupied by the safety devices, and there is inevitably a limit to overcoming safety problems as organic liquid electrolyte is basically used.

Based on this recognition, using a solid electrolyte to replace the organic liquid electrolyte is gaining attention as an alternative to overcome the safety problem. However, since a solid electrolyte is used, when manufacturing the positive electrode of an all-solid-state battery, a solid electrolyte for lithium ion conduction path must be additionally mixed, so for effective performance implementation of the cell, the positive electrode active material, solid electrolyte, conductive material, and binder in the positive electrode need to have a structure optimized for performance implementation.

### [Prior Art Documents]

### [Patent Literatures]

Chinese Patent Publication No. 117638001 (March 1, 2024)

### [DISCLOSURE]

### [TECHNICAL PROBLEM]

An objective of the present disclosure is to provide a positive electrode for all-solid-state batteries with improved electrochemical characteristics by applying a sulfide-based solid electrolyte having an argyrodite-type structure with Young's modulus of less than 20 GPa and reducing the porosity of the positive electrode to less than 20%.

Another objective of the present disclosure is to provide an all-solid-state battery with improved output characteristics by applying the positive electrode for all-solid-state batteries.

### [TECHNICAL SOLUTION]

An embodiment of the present disclosure provides a positive electrode for all-solid-state batteries comprising a positive electrode active material, a solid electrolyte, a conductive material, and a binder, wherein the Young's modulus of the solid electrolyte is less than 20 GPa, and the porosity of the positive electrode is less than 20%.

The Young's modulus of the solid electrolyte may be greater than 10 GPa and less than 20 GPa.

The porosity of the positive electrode may be greater than 10% and less than 20%.

The solid electrolyte may be a sulfide-based solid electrolyte having an argyrodite-type structure.

The positive electrode may comprise 70 wt% to 95 wt% of the positive electrode active material, 4.8 wt% to 29.8 wt% of the solid electrolyte, 0.1 wt% to 5 wt% of the conductive material, and 0.1 wt% to 5 wt% of the binder based on the total weight of the positive electrode.

The sulfide-based solid electrolyte may be represented by the following Chemical Formula 1.

[Chemical Formula 1] LiₐP_{b}S_{c}Cl_{d}Xₑ

In Chemical Formula 1, P may be substituted or doped with Si, Ge or Sn, S may be substituted or doped with O or Se, X is Br or I, and 4≤a≤7, 0≤b≤1, 3≤c≤5 and 0≤d<e≤3.

Another embodiment of the present disclosure provides a method for manufacturing the positive electrode for all-solid-state batteries, comprising (1) mixing a positive electrode active material, a solid electrolyte, a conductive material, and a binder, and (2) kneading the mixture.

The kneading may be performed by a kneader.

Yet another embodiment of the present disclosure provides an all-solid-state battery comprising a positive electrode, a negative electrode, and a solid electrolyte layer disposed between the positive electrode and the negative electrode, wherein the positive electrode comprises the positive electrode for all-solid-state batteries.

### [ADVANTAGEOUS EFFECTS]

The positive electrode for all-solid-state batteries according to the present disclosure satisfies that the Young's modulus of the solid electrolyte included in the positive electrode is less than 20 GPa and the porosity of the positive electrode is less than 20%, thereby increasing the interfacial contact between the solid electrolyte and the positive electrode active material to improve the electrochemical characteristics and output characteristics of the all-solid-state battery.

### [BRIEF DESCRIPTION OF THE DRAWINGS]

FIG. 1 is a graph showing the resistance of an all-solid-state battery including a positive electrode according to an embodiment of the present disclosure measured using electrochemical impedance spectroscopy (EIS).
FIG. 2 is a graph showing the capacity retention of all-solid-state batteries including positive electrodes according to Example 3 and Comparative Example 3 of the present disclosure.
FIG. 3 is a graph showing the capacity retention of all-solid-state batteries including positive electrodes according to Example 3 and Comparative Example 4 of the present disclosure.
FIG. 4 is a graph showing the capacity retention of all-solid-state batteries including positive electrodes according to Example 3 and Example 4 of the present disclosure.

### [BEST MODE]

Hereinafter, embodiments of the present disclosure will be described in detail. Prior to this, the terms or words used in the present specification and claims should not be construed as limited to their conventional or dictionary meanings, but should be construed as meanings and concepts consistent with the technical idea of the present disclosure based on the principle that the inventor can appropriately define the concept of terms to explain his or her invention in the best way. Therefore, the configurations described in the embodiments described in the present specification are merely the most preferred embodiments of the present disclosure and do not represent all the technical ideas of the present disclosure, so it should be understood that there may be various equivalents and modifications that can replace them at the time of this application.

Throughout this specification, when a part 'includes' a certain component, this means that it may further include other components rather than excluding other components unless specifically stated otherwise.

In addition, descriptions that specify or add components to embody them can be applied to all inventions unless there is a special limitation, and are not limited to specific inventions.

In addition, throughout the description and claims of the present disclosure, what is expressed in singular form also includes plural cases unless otherwise stated.

In addition, throughout the description and claims of the present disclosure, "or" includes "and" unless otherwise stated. Therefore, "comprising A or B" means all three cases of comprising A, comprising B, or comprising A and B.

In addition, all numerical ranges include both end values and all intermediate values therebetween unless explicitly excluded.

### <Positive electrode for All-Solid-State Battery>

The positive electrode for all-solid-state batteries according to the present disclosure may include a current collector and a positive electrode active material layer formed on at least one side of the current collector, and the positive electrode active material layer may include a positive electrode active material, a solid electrolyte, a conductive material, and a binder.

The porosity of the positive electrode for all-solid-state batteries according to the present disclosure may be less than 20%. The porosity can be calculated using the true density of each positive electrode material measured using He pycnometry (BEL-Pycno) after measuring the weight and thickness of the positive electrode punched with a 13-phi electrode after isotropic pressing (500 MPa, 30 minutes). According to a specific embodiment of the present disclosure, the porosity of the positive electrode for all-solid-state batteries may be greater than 3%, greater than 5%, greater than 10%, or greater than 15% within the above range, and also may be less than 20%, less than 18%, less than 15%, or less than 10%. For example, the porosity of the positive electrode for all-solid-state batteries may be greater than 10% and less than 20%. By the positive electrode for all-solid-state batteries having a porosity in this range, the interfacial contact area between the solid electrolyte and the positive electrode active material described later can be improved, thereby enhancing the electrochemical performance of the positive electrode.

The elastic modulus, that is, Young's modulus of the solid electrolyte included in the positive electrode for all-solid-state batteries according to the present disclosure may be less than 20 GPa. The Young's modulus can be measured by a conventional method of measuring Young's modulus, and specifically can be measured using a dynamic mechanical analysis system (DMA800, TA Instruments). According to a specific embodiment of the present disclosure, the Young's modulus of the solid electrolyte may be in a range of greater than 3 GPa, greater than 5 GPa, greater than 10 GPa, or greater than 15 GPa within the above range, and also may be in a range of less than 20 GPa, less than 18 GPa, less than 15 GPa, or less than 10 GPa. For example, the Young's modulus of the solid electrolyte may be greater than 10 GPa and less than 20 GPa. By the solid electrolyte having a Young's modulus in this range, the contact between the solid electrolyte and the positive electrode material increases, increasing the conduction pathway, and through this, the electrode output performance can be improved.

In the positive electrode for all-solid-state batteries according to the present disclosure, the Young's modulus of the solid electrolyte included in the positive electrode may be less than 20 GPa and the porosity of the positive electrode may be less than 20%. According to a specific embodiment of the present disclosure, the positive electrode may satisfy the above-described ranges of Young's modulus and positive electrode porosity. By the solid electrolyte included in the positive electrode for all-solid-state batteries having Young's modulus in this range and the positive electrode having a porosity in this range, the components in the all-solid-state battery can have a structure optimized for performance implementation, and the interfacial contact between the solid electrolyte and the positive electrode active material can be increased to improve the output characteristics of the battery.

According to an embodiment of the present disclosure, the solid electrolyte included in the positive electrode for all-solid-state batteries may be a sulfide-based solid electrolyte and may be represented by the following Chemical Formula 1.

[Chemical Formula 1] LiₐP_{b}S_{c}Cl_{d}Xₑ

In Chemical Formula 1, P may be substituted or doped with Si, Ge or Sn, S may be substituted or doped with O or Se, X is a halogen element, specifically Br or I, and 4≤a≤7, 0≤b≤1, 3≤c≤5 and 0≤d<e≤3.

In addition, preferably, the sulfide-based solid electrolyte may be a solid electrolyte having an argyrodite-type structure including at least one selected from Li_{5.5}PS_{4.5}Cl_{0.5}Br, Li₆PS₅Br, and Li₆PS₅I.

According to an embodiment of the present disclosure, the positive electrode for all-solid-state batteries may include the solid electrolyte in a range of 4.8 to 29.8 wt% based on the total weight of the positive electrode. According to a specific embodiment of the present disclosure, the solid electrolyte may be included in a range of 4.8 wt% or more, 10 wt% or more, 15 wt% or more, or 20 wt% or more within the above range, and also may be included at 29.8 wt% or less, 25 wt% or less, 20 wt% or less, or 15 wt% or less.

The positive electrode active material included in the positive electrode for all-solid-state batteries according to the present disclosure is not particularly limited as long as it is a material capable of reversibly intercalating and deintercalating lithium ions. For example, it may include at least one of composite compounds of metals such as cobalt, manganese, nickel, iron or combinations thereof; and lithium.

As a more specific example, as the core of the positive electrode active material, compounds represented by any one of the following chemical formulas may be used: LiₐA_{1-b}R_{b}D₂ (wherein 0.90 ≤ a ≤ 1.8 and 0 ≤ b ≤ 0.5); LiₐE_{1-b}R_{b}O_{2-c}D_{c} (wherein 0.90 ≤ a ≤ 1.8, 0 ≤ b ≤ 0.5, and 0 ≤ c ≤ 0.05); LiE_{2-b}R_{b}O_{4-c}D_{c} (wherein 0 ≤ b ≤ 0.5, 0 ≤ c ≤ 0.05); LiₐNi_{1-b-c}Co_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO₂ (wherein 0.90 ≤ a ≤ 1.8, 0 ≤ b ≤ 0.9, 0 ≤ c ≤ 0.5, 0 ≤ d ≤ 0.5 and 0 ≤ e ≤ 0.1); LiₐNiG_{b}O₂ (wherein 0.90 ≤ a ≤ 1.8 and 0.001 ≤ b ≤ 0.1); LiₐCoG_{b}O₂ (wherein 0.90 ≤ a ≤ 1.8 and 0.001 ≤ b ≤ 0.1); LiₐMnG_{b}O₂ (wherein 0.90 ≤ a ≤ 1.8 and 0.001 ≤ b ≤ 0.1); LiₐMn₂G_{b}O₄ (wherein 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂ (PO₄)₃ (0 ≤ f ≤ 2); Li_{(3-f)}Fe₂ (PO₄)₃ (0 ≤ f ≤ 2); and LiFePO₄.

In the above chemical formulas, A is Ni, Co, Mn or a combination thereof; R is Al, Ni, Co, Mn, Cr, Fe, Mg, Sr, V, a rare earth element or a combination thereof; D is O, F, S, P or a combination thereof; E is Co, Mn or a combination thereof; Z is F, S, P or a combination thereof; G is Al, Cr, Mn, Fe, Mg, La, Ce, Sr, V or a combination thereof; Q is Ti, Mo, Mn or a combination thereof; T is Cr, V, Fe, Sc, Y or a combination thereof; and J is V, Cr, Mn, Co, Ni, Cu or a combination thereof.

In one embodiment, the positive electrode active material may have a particle size of about 0.01 µm to 50 µm, and may have a form of secondary particles assembled by aggregation of a plurality of particles.

According to an embodiment of the present disclosure, the positive electrode for all-solid-state batteries may include the positive electrode active material in a range of 70 to 95 wt% based on the total weight of the positive electrode. According to a specific embodiment of the present disclosure, the positive electrode active material may be included in a range of 70 wt% or more, 75 wt% or more, 80 wt% or more, or 85 wt% or more within the above range, and also may be included at 95 wt% or less, 90 wt% or less, 85 wt% or less, or 80 wt% or less.

The conductive material included in the positive electrode for all-solid-state batteries according to the present disclosure is not particularly limited as long as it has conductivity without causing chemical changes to the battery, and may include, for example, one or a mixture of two or more selected from graphite such as natural graphite or artificial graphite; carbon black such as carbon black, acetylene black, Ketjen black, channel black, furnace black, lamp black, and summer black; conductive fibers such as carbon fibers like VGCF (Vapor grown carbon fiber) or metal fibers; metal powders such as fluorocarbon, aluminum, and nickel powder; conductive whiskers such as zinc oxide and potassium titanate; conductive metal oxides such as titanium oxide; and conductive materials such as polyphenylene derivatives.

According to an embodiment of the present disclosure, the positive electrode for all-solid-state batteries may include the conductive material in a range of 0.01 to 10 wt% based on the total weight of the positive electrode. According to a specific embodiment of the present disclosure, the conductive material may be included in a range of 0.01 wt% or more, 0.1 wt% or more, 1 wt% or more, or 3 wt% or more within the above range, and also may be included at 10 wt% or less, 8 wt% or less, 6 wt% or less, or 4 wt% or less. For example, the conductive material may be included in a range of 0.1 to 5 wt% based on the total weight of the positive electrode. When the conductive material is included more than the upper limit, the ratio of active material decreases, resulting in reduced energy density, and when included less than the lower limit, the electronic conductivity does not reach the desired level, resulting in decreased capacity expression rate.

The binder included in the positive electrode for all-solid-state batteries according to the present disclosure is a component added in consideration of the binding properties of the positive electrode active material, sulfide-based solid electrolyte, and conductive material to the positive electrode for all-solid-state batteries, and any polymer binder known to be usable for electrode formation in the technical field to which the present disclosure belongs can be used without particular limitation.

Examples of such polymer binders include acrylic binders, polyvinylidene fluoride (PVDF)-based binders, polytetrafluoroethylene (PTFE)-based binders, or butadiene rubber-based binders such as nitrile butadiene rubber (NBR), and various other polymer binders can be used as well. The positive electrode for all-solid-state batteries may include the binder in a range of 0.1 to 5 wt% based on the total weight of the positive electrode. According to a specific embodiment of the present disclosure, the binder may be included in a range of 0.1 wt% or more, 1 wt% or more, 2 wt% or more, or 3 wt% or more within the above range, and also may be included at 5 wt% or less, 4 wt% or less, 3 wt% or less, or 2 wt% or less.

The positive electrode for all-solid-state batteries according to the present disclosure may further include additives such as fillers, coating agents, dispersants, and ion conductive aids in addition to the above-described positive electrode active material, solid electrolyte, conductive material, and binder. As the fillers, coating agents, dispersants, ion conductive aids, etc., known materials generally used for positive electrodes for all-solid-state batteries can be used.

The thickness of the positive electrode may be, for example, 70 to 150 µm.

### <Method for Manufacturing Positive electrode for All-Solid-State Battery>

The positive electrode for all-solid-state batteries according to the present disclosure can be manufactured according to methods widely known in the art, and is not limited to a specific manufacturing method, but may include both dry processes and wet processes. For example, in the case of a dry process, a positive electrode active material, solid electrolyte, conductive material, and binder are mixed and the mixture is made to agglomerate through a kneading process to manufacture the electrode. In addition, in the case of a wet process, a positive electrode active material, solid electrolyte, conductive material, and binder are mixed in a solvent to prepare a slurry-like positive electrode mixture, and this positive electrode mixture is applied to a positive electrode current collector.

The positive electrode current collector is generally made with a thickness of 3 to 500 µm. Such positive electrode current collector is not particularly limited as long as it has high conductivity without causing chemical changes to the battery, and for example, stainless steel, aluminum, nickel, titanium, calcined carbon, or aluminum or stainless steel surface-treated with carbon, nickel, titanium, silver, etc. on the surface may be used. The current collector may enhance the adhesion of the positive electrode active material by forming fine irregularities on its surface, and various forms such as films, sheets, foils, nets, porous bodies, foams, and nonwoven fabrics are possible.

According to an embodiment of the present disclosure, the positive electrode for all-solid-state batteries may be manufactured by a dry process. The dry process may include (1) mixing a positive electrode active material, solid electrolyte, conductive material, and binder, and (2) kneading the mixture. Kneading collectively refers to all processes of agglomerating (kneading) the mixture to form it into an electrode, and can be performed from directly kneading the mixture with a mortar to using kneader equipment such as a single screw kneader, or using other tangential mixers (kneaders), intermeshing mixers (kneaders), etc.

Since the torque energy applied varies when different equipment is used for kneading, the electrode structure may be formed differently. Therefore, even when using compounds with the same materials and composition, there may be differences in the porosity of the electrode. According to a specific embodiment of the present disclosure, by performing the kneading operation using a kneader, a positive electrode having a porosity that can exhibit the desired effects of the present disclosure can be manufactured.

### <All-Solid-State Battery>

Another embodiment of the present disclosure provides an all-solid-state battery comprising a positive electrode, a negative electrode, and a solid electrolyte layer disposed between the positive electrode and the negative electrode, wherein the positive electrode is the above-described positive electrode for all-solid-state batteries.

Since the positive electrode included in the all-solid-state battery has been described in detail above, the negative electrode and solid electrolyte included in the all-solid-state battery will be described in detail below.

The solid electrolyte layer disposed between the positive electrode and the negative electrode may include, for example, a sulfide-based solid electrolyte. The sulfide-based solid electrolyte may be the same as or different from the sulfide-based solid electrolyte included in the positive electrode.

For specific details about the sulfide-based solid electrolyte, refer to the positive electrode section described above.

The Young's modulus of the solid electrolyte is, for example, 35 GPa or less, 30 GPa or less, 27 GPa or less, 25 GPa or less, 23 GPa or less, and is 10 to 35 GPa, 15 to 35 GPa, 15 to 30 GPa, or 15 to 25 GPa. By the solid electrolyte having an elastic modulus in this range, pressing and/or sintering of the solid electrolyte is performed more easily.

The solid electrolyte layer further includes, for example, a binder. The binder included in the solid electrolyte layer is, for example, styrene butadiene rubber (SBR), polytetrafluoroethylene, polyvinylidene fluoride, polyethylene, etc., but is not limited to these and any material used as a binder in the relevant technical field is possible. The binder of the solid electrolyte layer may be the same as or different from the binders of the positive electrode active material layer and the negative electrode active material layer.

Next, the negative electrode of the all-solid-state battery may include a negative electrode current collector and a negative electrode active material layer.

The thickness of the negative electrode active material layer is, for example, 50% or less, 40% or less, 30% or less, 20% or less, 10% or less, or 5% or less of the thickness of the positive electrode active material layer. The thickness of the negative electrode active material layer is, for example, 1 µm to 20 µm, 2 µm to 10 µm, or 3 µm to 7 µm. If the thickness of the negative electrode active material layer is too thin, lithium dendrites formed between the negative electrode active material layer and the negative electrode current collector may collapse the negative electrode active material layer, making it difficult to improve the cycle characteristics of the all-solid-state battery. If the thickness of the negative electrode active material layer increases too much, the energy density of the all-solid-state battery decreases and the internal resistance of the all-solid-state battery due to the negative electrode active material layer increases, making it difficult to improve the cycle characteristics of the all-solid-state battery.

The negative electrode active material layer includes, for example, a negative electrode active material that forms an alloy or compound with lithium.

The negative electrode active material included in the negative electrode active material layer has, for example, a particle form. The average particle size of the negative electrode active material having a particle form is, for example, 4 µm or less, 3 µm or less, 2 µm or less, 1 µm or less, or 900 nm or less. The average particle size of the negative electrode active material having a particle form is, for example, 10 nm to 4 µm or less, 10 nm to 3 µm or less, 10 nm to 2 µm or less, 10 nm to 1 µm or less, or 10 nm to 900 nm or less. By the negative electrode active material having an average particle size in this range, reversible absorption and/or desorption of lithium during charge and discharge may be further facilitated. The average particle size of the negative electrode active material is, for example, the volume-based median diameter (D50) measured using a laser particle size distribution analyzer.

The negative electrode active material included in the negative electrode active material layer includes, for example, at least one selected from carbon-based negative electrode active materials and metal or metalloid negative electrode active materials.

The carbon-based negative electrode active material is particularly amorphous carbon. Amorphous carbon is, for example, carbon black (CB), acetylene black (AB), furnace black (FB), Ketjen black (KB), graphene, etc., but is not necessarily limited to these and any material classified as amorphous carbon in the relevant technical field is possible. Amorphous carbon is carbon having no crystallinity or very low crystallinity and is distinguished from crystalline carbon or graphitic carbon.

The metal or metalloid negative electrode active material includes at least one selected from the group consisting of gold (Au), platinum (Pt), palladium (Pd), silicon (Si), silver (Ag), aluminum (Al), bismuth (Bi), tin (Sn), and zinc (Zn), but is not necessarily limited to these and any metal negative electrode active material or metalloid negative electrode active material that forms an alloy or compound with lithium in the relevant technical field is possible. For example, nickel (Ni) is not a metal negative electrode active material because it does not form an alloy with lithium.

The negative electrode active material layer includes one type of negative electrode active material among these negative electrode active materials, or includes a mixture of a plurality of different negative electrode active materials. For example, the negative electrode active material layer includes only amorphous carbon, or includes at least one selected from the group consisting of gold (Au), platinum (Pt), palladium (Pd), silicon (Si), silver (Ag), aluminum (Al), bismuth (Bi), tin (Sn), and zinc (Zn). Alternatively, the negative electrode active material layer includes a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). The mixing ratio of mixtures such as amorphous carbon and silver (Ag) is, for example, 10:1 to 1:2, 5:1 to 1:1, or 4:1 to 2:1 by weight ratio, but is not necessarily limited to these ranges and is selected according to the characteristics of the all-solid-state battery required. By the negative electrode active material having such a composition, the cycle characteristics of the all-solid-state battery are further improved.

The negative electrode active material included in the negative electrode active material layer includes, for example, a mixture of first particles made of amorphous carbon and second particles made of metal or metalloid. The metal or metalloid includes, for example, gold (Au), platinum (Pt), palladium (Pd), silicon (Si), silver (Ag), aluminum (Al), bismuth (Bi), tin (Sn), and zinc (Zn). The metalloid is alternatively a semiconductor. The content of the second particles is 8 to 60 wt%, 10 to 50 wt%, 15 to 40 wt%, or 20 to 30 wt% based on the total weight of the mixture. By the second particles having a content in this range, for example, the cycle characteristics of the all-solid-state battery are further improved.

The negative electrode active material layer includes, for example, a binder. The binder is, for example, styrene-butadiene rubber (SBR), polytetrafluoroethylene, polyvinylidene fluoride, polyethylene, vinylidene fluoride/hexafluoropropylene copolymer, polyacrylonitrile, polymethyl methacrylate, etc., but is not necessarily limited to these and any material used as a binder in the relevant technical field is possible. The binder may be composed of a single binder or a plurality of different binders.

By the negative electrode active material layer including a binder, the negative electrode active material layer is stabilized on the negative electrode current collector. In addition, cracking of the negative electrode active material layer is suppressed despite volume changes and/or relative position changes of the negative electrode active material layer during the charge and discharge process. For example, when the negative electrode active material layer does not include a binder, it is possible for the negative electrode active material layer to be easily separated from the negative electrode current collector. In the portion where the negative electrode active material layer is detached from the negative electrode current collector, the negative electrode current collector is exposed and contacts the solid electrolyte layer, thereby increasing the possibility of short circuit occurrence. The negative electrode active material layer is manufactured, for example, by applying a slurry in which the materials constituting the negative electrode active material layer are dispersed onto the negative electrode current collector and drying it. By including a binder in the negative electrode active material layer, stable dispersion of the negative electrode active material in the slurry is possible. For example, when applying the slurry onto the negative electrode current collector by screen printing, it is possible to suppress screen clogging (for example, clogging by aggregates of negative electrode active material).

The negative electrode current collector is composed of, for example, a material that does not react with lithium, that is, does not form both alloys and compounds. The materials constituting the negative electrode current collector are, for example, copper (Cu), stainless steel, titanium (Ti), iron (Fe), cobalt (Co), and nickel (Ni), but are not necessarily limited to these and any material used as an electrode current collector in the relevant technical field is possible. The negative electrode current collector may be composed of one type of the above-mentioned metals, or may be composed of an alloy or coating material of two or more types of metals. The negative electrode current collector is, for example, in a plate or foil form.

The negative electrode active material layer may further include additives used in conventional all-solid-state batteries, for example, fillers, dispersants, ion conductors, etc.

Meanwhile, the negative electrode may not include separate lithium metal except for lithium metal formed during charging. That is, the all-solid-state battery according to an embodiment of the present disclosure may be a negative electrode-free all-solid-state battery, and in the initial state or after complete discharge, lithium may not be included in the negative electrode current collector, the negative electrode active material layer, or between the negative electrode active material layer and the solid electrolyte layer.

For example, when an all-solid-state battery including such a negative electrode is overcharged, the negative electrode active material included in the negative electrode active material layer and lithium ions migrated from the positive electrode form an alloy or compound, and a metal layer mainly composed of lithium may be formed (deposited) on the negative electrode. The metal layer may be deposited and formed between the negative electrode current collector and the negative electrode active material layer, inside the negative electrode active material layer, or both. When the metal layer is positioned between the negative electrode current collector and the negative electrode active material layer, the metal layer may be formed closer to the negative electrode current collector layer than the negative electrode active material layer.

In the negative electrode-free all-solid-state battery according to an embodiment of the present disclosure, the negative electrode active material layer may include, as a negative electrode active material, at least one lithium-affinity material selected from the group consisting of silver (Ag), gold (Au), platinum (Pt), zinc (Zn), silicon (Si), magnesium (Mg), copper oxide (CuO), zinc oxide (ZnO), cobalt oxide (CoO), manganese monoxide (MnO), silicon dioxide (SiO₂), titanium dioxide (TiO₂), alumina (Al₂O₃), zinc peroxide (ZnO₂), and lithium fluoride (LiF). However, it is not limited to these, and any lithium-affinity material having similar properties or characteristics to these can be applied without particular limitation.

In an embodiment of the present disclosure, the lithium-affinity material does not necessarily need to exist uniformly in the negative electrode active material layer, and may be localized on the negative electrode current collector side in the negative electrode active material layer. In this case, a Li(lithium-affinity material) alloy may be formed as a metal layer by lithium ions reacting with the lithium-affinity material localized layer in the negative electrode active material layer that has reached near the negative electrode current collector.

In addition, in the initial state without charge and discharge, the lithium-affinity material included in the negative electrode active material layer may be in particle form or film form. When the lithium-affinity material exists in particle form, the average particle diameter (d50, diameter length or average diameter) of the lithium-affinity material may be 20 nm to 1 µm, but is not limited to this.

Meanwhile, the negative electrode active material layer may also include a carbon material as a negative electrode active material in addition to the lithium-affinity material. Amorphous carbon may be preferably used as the carbon material included in the negative electrode active material layer. Specific examples of the amorphous carbon include amorphous carbon black (amorphous acetylene black, amorphous furnace black, amorphous Ketjen black), amorphous activated carbon, amorphous graphene, and combinations thereof. However, by positioning carbon material with relatively small particle size on the interface side in contact with the solid electrolyte layer in the negative electrode active material layer, the interface of the negative electrode active material layer in contact with the solid electrolyte layer can be made more flat. Based on 100 wt% of the total negative electrode active material included in the negative electrode active material layer, the negative electrode active materials other than the lithium-affinity material may be combined to be 50 wt% or more, for example, 70 wt% or more. The content of negative electrode active materials other than the lithium-affinity material can be measured by the same method as the method for measuring the content of the lithium-affinity material.

Meanwhile, the negative electrode current collector may be positioned at the outermost position based on the stacking direction, facing the opposite surface of the negative electrode active material layer that does not contact the solid electrolyte layer. However, when the battery includes a bicell or more structure, it may be positioned at places other than the outermost position based on the stacking direction.

The negative electrode current collector may be in a plate or foil form. The negative electrode current collector may include a material that does not react with lithium, that is, does not form either an alloy or a compound with lithium. Examples of materials constituting the negative electrode current collector include copper, aluminum, stainless steel, titanium, iron, cobalt, and nickel. And the negative electrode current collector may be composed of one type of these metals, or may be composed of an alloy or clad (coated) material of two or more types of metals.

The all-solid-state battery may be manufactured, for example, by manufacturing a positive electrode, a negative electrode, and a solid electrolyte layer respectively, and then stacking these layers.

The present disclosure provides a battery module including the all-solid-state battery as a unit cell, a battery pack including the battery module, and a device including the battery pack as a power source.

At this time, specific examples of the device include, but are not limited to, power tools powered by electric motors; electric vehicles including Electric Vehicles (EV), Hybrid Electric Vehicles (HEV), and Plug-in Hybrid Electric Vehicles (PHEV); electric two-wheelers including E-bikes and E-scooters; electric golf carts; and power storage systems.

### [MODE FOR INVENTION]

Hereinafter, specific examples of the present disclosure are presented. However, the examples described below are merely for specifically illustrating or explaining the present disclosure, and the present disclosure is not limited thereto. In addition, the description of contents not described here is omitted as those skilled in the art can sufficiently infer technically.

### <Examples: Manufacturing of Positive electrode for All-Solid-State Battery and All-Solid-State Battery Including the Same>

### Example 1

Lithium nickel cobalt manganese oxide (LiNi_{0.8}Co_{0.1}Mn_{0.1}O₂) as a positive electrode active material, Li₆PS₅Br having an argyrodite-type structure with Young's modulus of 19.2 GPa as a sulfide-based solid electrolyte, carbon nanofiber (CNF) as a conductive material, and polytetrafluoroethylene (PTFE) as a binder were sequentially added to a container in a weight ratio of 80:15:2.5:2.5. Each time each component was added, mixing was performed 5 times for 30 seconds at 2000 RPM using a Lab Blender to prepare a positive electrode mixture. The mixture was subjected to shear force at 10 rpm at 100°C using a kneader and mixed for 15 minutes to prepare a positive electrode mixture. A free-standing film was manufactured from the positive electrode mixture using a two-roll mill equipment at 25°C.

### Example 2

A positive electrode for all-solid-state batteries was manufactured in the same manner as Example 1, except that Li_{5.5}PS_{4.5}Cl_{0.5}Br having an argyrodite-type structure with Young's modulus of 19.7 GPa was used as the sulfide-based solid electrolyte.

### Example 3

First, 6g of carbon black, 2g of Ag, 9.33g of polyvinylidene fluoride (PVdF) binder, and 7.67g of N-methyl-2-pyrrolidone (NMP) solution were placed in a Thinky mixer container and mixed 12 times for 3 minutes at 2,000 rpm. Thereafter, an additional 5g of N-methyl-2-pyrrolidone solution was added and mixed 5 times for 3 minutes at 2,000 rpm to prepare a negative electrode active material slurry, which was then applied and dried on a SUS foil to manufacture a negative electrode.

Subsequently, the positive electrode manufactured in Example 1 was positioned to face the manufactured negative electrode, and a sulfide-based solid electrolyte (Li₂S-P₂S₅) was interposed between them to manufacture an all-solid-state battery. Thereafter, the manufactured cell was subjected to pressure treatment at 500 MPa for 30 minutes using Warm Isostatic Pressure equipment.

### Example 4

An all-solid-state battery was manufactured in the same manner as Example 3, except that the positive electrode manufactured in Example 2 was used.

### Comparative Example 1

A positive electrode for all-solid-state batteries was manufactured in the same manner as Example 1, except that Li₆PS₅Cl with Young's modulus of 21 GPa was used as the sulfide-based solid electrolyte.

### Comparative Example 2

A positive electrode for all-solid-state batteries was manufactured in the same manner as Example 1, except that Li_{5.5}PS_{4.5}Cl_{0.5}Br with Young's modulus of 19.7 GPa was used as the sulfide-based solid electrolyte and mixing was performed for 10 minutes using a mortar instead of a kneader for the mixture.

### Comparative Example 3

An all-solid-state battery was manufactured in the same manner as Example 3, except that the positive electrode manufactured in Comparative Example 1 was used.

### Comparative Example 4

An all-solid-state battery was manufactured in the same manner as Example 3, except that the positive electrode manufactured in Comparative Example 2 was used.

### <Experimental Examples>

### Experimental Example 1: Evaluation of Solid Electrolyte and Electrode

### Characteristics

The Young's modulus of the solid electrolytes used in Examples 1 and 2 and Comparative Examples 1 and 2 were recorded, and Table 1 summarizing the results of measuring the electronic conductivity, ionic conductivity, and porosity of the positive electrodes for all-solid-state batteries of Examples 1 and 2 and Comparative Examples 1 and 2 is shown below.

Electronic conductivity and ionic conductivity were measured as follows. The positive electrodes of Examples 1 and 2 and Comparative Examples 1 and 2 were positioned between current collectors and compressed to manufacture electrode assemblies. Thereafter, the manufactured assemblies were subjected to pressure treatment at 500 MPa for 30 minutes using Warm Isostatic Pressure equipment. Then, using Electrochemical Impedance Spectroscopy (EIS), electronic conductivity and ionic conductivity were measured in the SoC 0 state in the range of 800 kHz to 10 mHz.

The porosity was calculated using the true density of each positive electrode material measured using He pycnometry (BEL-Pycno) after measuring the weight and thickness of the positive electrode punched with a 13-phi electrode after isotropic pressing (500 MPa, 30 minutes). For the reliability of the experimental values, 5 electrodes were measured and calculated as average values.

**[Table 1]**

| | Comp. Ex. 1 | Comp. Ex. 2 | Ex. 1 | Ex. 2 |
|---|---|---|---|---|
| Young's Modulus (GPa) | 21 | 19.7 | 19.2 | 19.7 |
| Porosity (%) | 15.4 | 20.2 | 14.0 | 15.1 |
| Electronic conductivity (mS/cm) | 8.2×10⁻⁵ | 7.3×10⁻⁵ | 3.6×10⁻⁴ | 2.7×10⁻⁴ |
| Ionic conductivity (mS/cm) | 1.0×10⁻⁴ | 7.5×10⁻⁵ | 2.4×10⁻⁴ | 1.8×10⁻⁴ |

From Table 1 above, it can be seen that the solid electrolytes of Examples 1 and 2 satisfied the conditions of Young's modulus less than 20 GPa and electrode porosity less than 20%, and it can be seen that the electrodes of Examples 1 and 2 showed improved electronic conductivity and ionic conductivity compared to Comparative Examples 1 and 2.

### Experimental Example 2: Electrode EIS Measurement Evaluation

The positive electrodes of Examples 1 and 2 and Comparative Examples 1 and 2 were positioned between current collectors and compressed to manufacture electrode assemblies. Thereafter, the manufactured assemblies were subjected to pressure treatment at 500 MPa for 30 minutes using Warm Isostatic Pressure equipment.

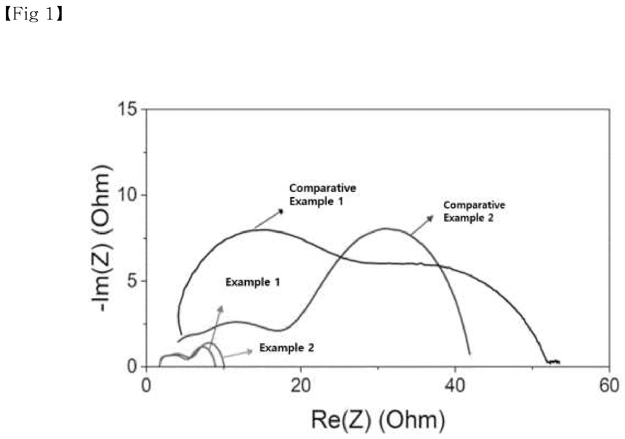

Using Electrochemical Impedance Spectroscopy (EIS), resistance was measured in the SoC 50 state in the range of 800 kHz to 10 mHz. The measured resistance is shown in FIG. 1. From FIG. 1, it can be confirmed that the batteries including the positive electrodes of Examples 1 and 2 have significantly lower resistance values than the batteries including the positive electrodes of Comparative Examples 1 and 2.

### Experimental Example 3: Capacity Retention Evaluation

Capacity retention (%) was evaluated for the all-solid-state batteries according to Examples 3 and 4 and Comparative Examples 3 and 4. The capacity retention is calculated as the discharge capacity relative to the charge capacity. Specifically, using the all-solid-state battery, the battery in a discharged state was charged at 0.1C under 25°C conditions. Then, discharge was performed at the same C-rate as during charging.

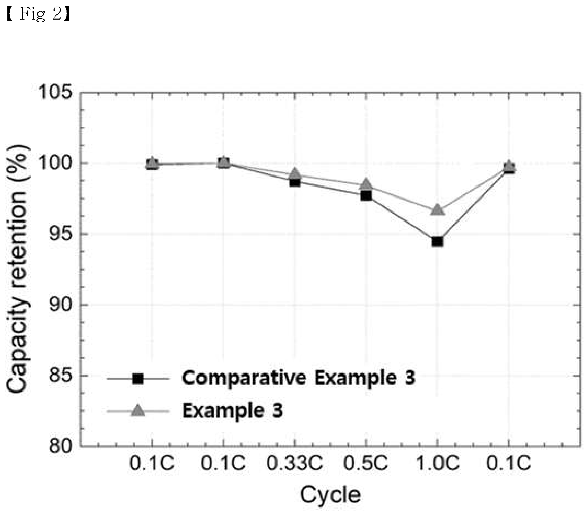

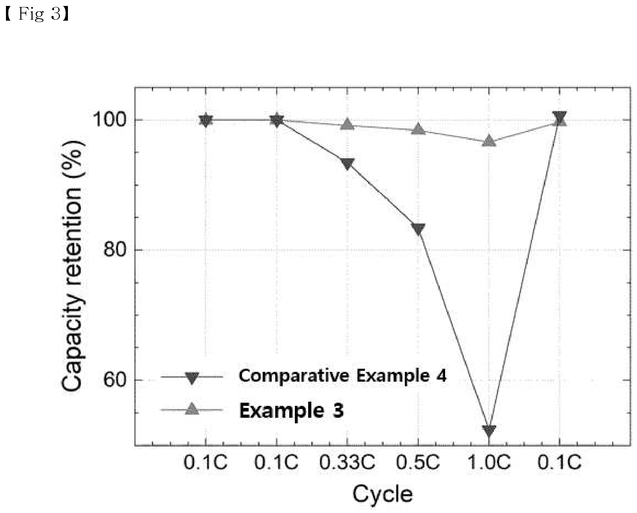

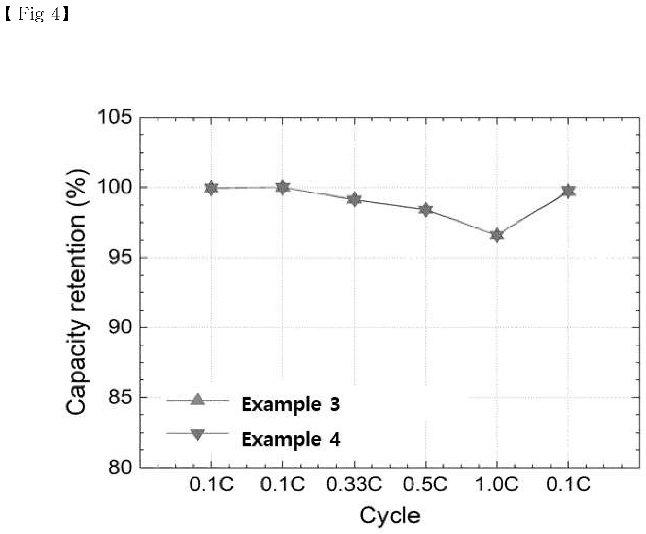

For each battery, the capacity retention was calculated by evaluating the capacity during charging and discharging. The capacity retention was calculated by varying the C-rate to 0.1C, 0.33C, 0.5C, 1.0C, and 0.1C, respectively, using the method described above. The results are shown in FIGS. 2 to 4.

From FIGS. 2 to 4, it can be confirmed that the capacity retention of the all-solid-state batteries according to Examples 3 and 4 is higher than that of the all-solid-state batteries according to Comparative Examples 3 and 4. Specifically, the capacity retention of the all-solid-state batteries according to Examples 3 and 4 is 95% or more at all measured C-rates. On the other hand, the all-solid-state batteries according to Comparative Examples 3 and 4 show lower capacity retention than Example 1 under conditions of 0.33C or higher.

Although preferred embodiments of the present disclosure have been described in detail above, the scope of rights of the present disclosure is not limited thereto, and various modifications and improvements by those skilled in the art using the basic concept of the present disclosure as defined in the following claims also belong to the scope of rights of the present disclosure.

## Claims

1. A positive electrode for all-solid-state batteries comprising a positive electrode active material, a solid electrolyte, a conductive material, and a binder,
wherein Young's modulus of the solid electrolyte is less than 20 GPa, and porosity of the positive electrode is less than 20%.

2. The positive electrode for all-solid-state batteries according to claim 1,
wherein the Young's modulus of the solid electrolyte is greater than 10 GPa and less than 20 GPa.

3. The positive electrode for all-solid-state batteries according to claim 1,
wherein the porosity of the positive electrode is greater than 10% and less than 20%.

4. The positive electrode for all-solid-state batteries according to claim 1,
wherein the solid electrolyte is a sulfide-based solid electrolyte having an argyrodite-type structure.

5. The positive electrode for all-solid-state batteries according to claim 1,
wherein the positive electrode comprises 70 wt% to 95 wt% of the positive electrode active material, 4.8 wt% to 29.8 wt% of the solid electrolyte, 0.1 wt% to 5 wt% of the conductive material, and 0.1 wt% to 5 wt% of the binder based on total weight of the positive electrode.

6. The positive electrode for all-solid-state batteries according to claim 1,
wherein the sulfide-based solid electrolyte is represented by the following Chemical Formula 1:
[Chemical Formula 1] LiₐP_{b}S_{c}Cl_{d}Xₑ
wherein in Chemical Formula 1, P may be substituted or doped with Si, Ge or Sn, S may be substituted or doped with O or Se, X is Br or I, and 4≤a≤7, 0≤b≤1, 3≤c≤5 and 0≤d<e≤3.

7. A method for manufacturing a positive electrode for all-solid-state batteries according to claim 1, comprising:
(1) mixing a positive electrode active material, a solid electrolyte, a conductive material, and a binder; and
(2) kneading the mixture.

8. The method for manufacturing a positive electrode for all-solid-state batteries according to claim 7,
wherein the kneading in step (2) is performed by a kneader.

9. An all-solid-state battery comprising:
a positive electrode;
a negative electrode; and
a solid electrolyte layer disposed between the positive electrode and the negative electrode,
wherein the positive electrode comprises the positive electrode for all-solid-state batteries of claim 1.
